## Europäisches Patentamt
## European Patent Office
## Office européen des brevets

(19)

(11) Veröffentlichungsnummer : **0 080 580**
**B1**

(12) **EUROPÄISCHE PATENTSCHRIFT**

(45) Veröffentlichungstag der Patentschrift :
07.08.85

(51) Int. Cl.⁴ : **C 08 F 14/06, C 08 F   2/20**

(21) Anmeldenummer : 82109178.2

(22) Anmeldetag : 05.10.82

(54) **Verfahren zur Herstellung von Polymeren und Copolymeren des Vinylchlorids und deren Verwendung.**

(30) Priorität : 02.12.81 DE 3147672

(43) Veröffentlichungstag der Anmeldung :
08.06.83 Patentblatt 83/23

(45) Bekanntmachung des Hinweises auf die Patenterteilung : 07.08.85 Patentblatt 85/32

(84) Benannte Vertragsstaaten :
BE CH DE FR GB IT LI NL SE

(56) Entgegenhaltungen :
EP-A- 0 072 900
FR-A- 2 315 512
CHEMICAL ABSTRACT, Band 88, Nr. 22, 29. Mai 1978, Seite 38, Nr. 153532s, Columbus, Ohio, USA

(73) Patentinhaber : CHEMISCHE WERKE HÜLS AG
- RSP Patente / PB 15 - Postfach 13 20
D-4370 Marl 1 (DE)

(72) Erfinder : Sielfeld, Gilbert, Dr.
Lipper Weg 197
D-4370 Marl (DE)

## Beschreibung

Die Erfindung betrifft die Herstellung eines feinkörnigen Vinylchlorid-Suspensionspolymerisats und dessen Verwendung für den Einsatz als Viskositätserniedriger in der Polyvinylchlorid-Plastisolverarbeitung.

Unter Polyvinylchlorid-Plastisolen oder Polyvinylchlorid-Pasten versteht man im allgemeinen Dispersionen von feinen Polyvinylchlorid-Pulvern in Weichmachern. Als verpastbare Polyvinylchlorid-Typen eignen sich hierzu Emulsionspolymerisate und insbesondere auch Mikrosuspensionspolymerisate.

Es handelt sich hierbei um Polyvinylchlorid-Produkte, die nach der Polymerisation als Latex anfallen und im allgemeinen durch Sprühtrocknung zu agglomerierten Sekundär-Teilchen (Plastisol-Typen) aufgearbeitet werden. Bei der Plastisolzubereitung zerfallen diese Agglomerate überwiegend in Primär-Teilchen. Der Grad dieses Zerfalls und die Größenverteilung der Primär-Teilchen bestimmen die Fließeigenschaften der Paste.

Polyvinylchlorid-Plastisole bzw. -Pasten werden hauptsächlich als Streichpasten, als Tauch- und Gießpasten und als Spritzpasten für die verschiedensten Fertigartikel verwendet.

Im allgemeinen werden für die Herstellung weichmacherarmer Fertigartikel Pasten mit niedrigen Viskositäten gewünscht. Für diesen Zweck ist bekannt, die Pastenviskosität durch Zusatz von nichtverpastbaren feinkörnigen Suspensions-Polyvinylchlorid-Produkten (sog. Extender-Polyvinylchlorid), die erst bei Geliertemperatur aufgeschlossen werden, zu erniedrigen.

Gemäß der DE-PS 16 45 668 können solche Suspensionspolymerisate zur Erniedrigung der Viskosität von Polyvinylchlorid-Plastisolen mit Hilfe von Methylhydroxypropylcellulosen, die in 2 gewichtsprozentiger Lösung eine Viskosität von 50 bis 500 mPa.s bei 20 °C aufweisen, als einzigem Suspensionstabilisator und unter Verwendung von monomerlöslichen Katalysatoren hergestellt werden.

Wie aus dem Vergleichsbeispiel A (gemäß DE-PS 16 45 668 mit einer Methylhydroxypropylcellulose als Suspensionsstabilisator, die in 2 gewichtsprozentiger Lösung eine Viskosität von 100 mPa.s bei 20 °C zeigt) hervorgeht, enthalten so hergestellte Polymerisate jedoch einen erheblichen Anteil grober Körner mit Teilchengrößen über 100 µm. Dieses führt zu einer unerwünschten Sedimentation des Grobanteils und verursacht daher Schwierigkeiten beim Verarbeiten. Ferner führt der Grobanteil zu einer unerwünschten rauhen Oberfläche, insbesondere beim Auftrag sehr dünner Beschichtungen.

Wie aus Vergleichsversuch B (gemäß DE-PS 16 45 668) zu entnehmen ist, können feinteilige Polyvinylchlorid-Polymerisate durch Suspensionspolymerisation in Gegenwart einer Methylhydroxypropylcellulose, die in 2 gewichtsprozentiger Lösung eine Viskosität von 50 mPa.s bei 20 °C aufweist, hergestellt werden. Ein so hergestelltes Polymerisat eignet sich aufgrund seiner Feinheit und seines minimalen Grobanteils (> 100 µm) für dünne Beschichtungen und neigt nicht zur Sedimentation. Aufgrund seiner sehr hohen Kornporosität bewirkt jedoch das so hergestellte Produkt eine unzureichende Pastenviskositätserniedrigung. Sie genügt nicht den heutigen Anforderungen der Praxis.

Diese Nachteile des Standes der Technik wurden überwunden durch ein Verfahren zur Herstellung von Polymeren und Copolymeren des Vinylchlorids, wie es durch die Patentansprüche gekennzeichnet ist.

Erfindungsgemäß eignen sich als Suspensionsstabilisatoren oder Schutzkolloide Methylhydroxypropylcellulosen mit Methoxyl-Substitutionsgraden von 20 bis 32 % und Hydroxy-Propoxyl-Substitutionsgraden von 2 bis 10 % und Viskositäten von 30 bis 70 mPa.s, vorzugsweise 40 bis 60 mPa.s (gemessen in einer 2 gewichtsprozentigen wäßrigen Lösung, Ubbelohde-Kapillarviskosimeter, bei 20 °C). Sie werden gewöhnlich in Mengen von 0,15 bis 1,5 Gewichtsprozent, vorzugsweise 0,3 bis 1 Gewichtsprozent, bezogen auf das Monomere, eingesetzt.

Weitere erfindungsgemäß einzusetzende Schutzkolloide sind Methylcellulosen mit einem Methoxyl-Substitutionsgrad von 22 bis 34 Gewichtsprozent und einer Viskosität von 7 bis 20 mPa.s, vorzugsweise 10 bis 15 mPa.s (gemessen in 2 gewichtsprozentiger wäßriger Lösung nach Brookfield bei 20 °C und 20 Upm) in Kombination mit Methylcellulosen mit einem Methoxyl-Substitutionsgrad von 22 bis 34 Gewichtsprozent und einer Viskosität von 50 mPa.s bis 4 000 mPa.s, vorzugsweise 350 bis 1 600 mPa.s (gemessen in 2 gewichtsprozentiger wäßriger Lösung nach Brookfield bei 20 °C und 20 Upm) und/oder Methylhydroxypropylcellulosen mit einem Methoxyl-Substitutionsgrad von 20 bis 32 %, einem Hydroxy-Propoxyl-Substitutionsgrad von 2 bis 10 % und einer Viskosität von 100 bis 3 000 mPa.s, vorzugsweise 350 bis 1 600 mPa.s (gemessen in 2 gewichtsprozentiger wäßriger Lösung nach Brookfield bei 20 °C und 20 Upm). Die niedrigviskosen Methylcellulosen werden gewöhnlich in Mengen von 0,3 bis 1,5 Gewichtsprozent, vorzugsweise 0,4 bis 1,2 Gewichtsprozent, bezogen auf Monomere, eingesetzt. Die hochviskosen Methylcellulosen und/oder hochviskosen Methylhydroxypropylcellulosen werden gewöhnlich in Mengen von 0,01 bis 0,2 Gewichtsprozent, vorzugsweise 0,02 bis 0,15 Gewichtsprozent, bezogen auf Monomere, eingesetzt.

Als erfindungsgemäß einzusetzende Ethylen/Vinylacetat-Copolymere eignen sich solche, die aus 38 bis 55 Gewichtsprozent Vinylacetat, Rest Ethylen, zusammengesetzt sind und eine Viskositätszahl von 95 bis 210 ml/g, vorzugsweise 110 bis 160 ml/g, gemessen in Toluol in einer Konzentration von 0,005 g/cm³ bei 25 °C aufweisen. Sie werden in Mengen von 0,4 bis 8 Gewichtsprozent, vorzugsweise 0,6 bis 3 Gewichtsprozent, bezogen auf das Monomere oder Monomergemisch, eingesetzt. Sie können in fester Form oder in gelöster Form, gegebenenfalls zusammen mit den Katalysatoren, dem Polymerisationskessel zugeführt werden.

Die Ethylen-Vinylacetat-Copolymeren sind unter dem Handelsnamen LEVAPREN® im Handel erhältlich. Sie können durch radikalische Polymerisation in Lösung bei einem Druck von 100 bis 400 bar und einer Temperatur von 30 bis 250 °C hergestellt werden, z. B. gemäß DE-PS 11 26 613.

Brauchbare Katalysatoren sind die in der Vinylchlorid-Suspensionspolymerisation üblicherweise einzusetzenden öllöslichen Katalysatoren, wie Diacylperoxide, Peroxydicarbonate, Alkylperester oder Azoverbindungen, wie beispielsweise Diacetyl-, Dibenzoyl-, Dilauroyl-, 2,4-Dichlorbenzoylperoxid ; Peroxidicarbonate, wie Diisopropyl-, Dicyclohexyl-, Di-tert.-butylcyclohexyl-, Diethylcylcyclohexyl-, Distearylperoxidicarbonat ; Perester, wie Isopropyl-, tert.-Butylperacetat, tert.-Butylperoctoat, tert.-Butylperpivalat, tert.-Butyl-, Isoamylperneodecanoat ; gemischte Anhydride organischer Sulfopersäuren und organischer Säuren, wie z. B. Acetylcyclohexylsulfonylperoxid ; Azoverbindungen, wie z. B. Azoisobuttersäurenitril und Azobisdimethylvalerodinitril. Aus sicherheitstechnischen Gründen eignen sich jedoch besonders bei Raumtemperatur feste und lagerstabile Initiatoren. Beispiele geeigneter lagerstabiler Initiatoren sind Lauroylperoxid, Bis-(4-t-butylcyclohexyl)-peroxydicarbonat, Dimyristylperoxydicarbonat, Dicetylperoxydicarbonat, Bis-(2-methylbenzoyl)-peroxid. Die Katalysatoren können allein oder in Mischung eingesetzt werden, wobei man üblicherweise Mengen von 0,01 bis 0,3 Gewichtsprozent, vorzugsweise 0,01 bis 0,2 Gewichtsprozent, bezogen auf das Monomere, einsetzt.

Als weitere Polymerisationshilfsstoffe sind gegebenenfalls pH-Puffersysteme, wie Ammoniumsalze, Ammoniak oder Alkalicarbonate, Kettenregler, wie z. B. aliphatische Aldehyde, Trichlorethylen, Hilfsstoffe gegen Wandabscheidungen, Antioxidantien zu verwenden. Die Polymerisation kann bei üblichen Temperaturen zwischen 30 und 80 °C, vorzugsweise 45 bis 75 °C, und den entsprechenden Drücken durchgeführt werden.

Der Einsatz von bis zu 30 Gewichtsprozent mit Vinylchlorid polymerisierbarer Monomerer zur Herstellung von Copolymeren ist möglich. Beispiele brauchbarer Comonomerer sind Vinylester, wie Vinylacetat, Vinylidenhalogenide, wie Vinylidenchlorid, Acrylsäure- und Methacrylsäurealkylester mit 1 bis 18 Kohlenstoffatomen im Alkylrest, wie die Methyl-, n-Butyl- und Laurylester, Ester der Maleinsäure, wie Diethyl-, Dipropylmaleinat und schließlich Monoolefine, wie Ethylen oder Propylen.

Die Aufarbeitung der erfindungsgemäßen Suspensionspolymerisate wird nach üblichen Verfahren durchgeführt. Die üblicherweise entgaste wäßrige Polyvinylchlorid-Suspension kann zunächst in einer Zentrifuge entwässert, gegebenenfalls mit reinem Wasser gewaschen und anschließend einem Stromtrockner zugeführt werden. Gegebenenfalls kann eine weitere Trocknung in einem Trommeltrockner vorgenommen werden.

Die nach Anspruch 1 bis 6 hergestellten Polymerisate können erfindungsgemäß in Mischung mit 95 bis 45 Gewichtsprozent, vorzugsweise 90 bis 50 Gewichtsprozent pastenfähigem Polyvinylchlorid, wie Emulsions- oder Mikrosuspensions-Polyvinylchlorid, als Viskositätserniedriger eingesetzt werden. Als mit Weichmachern und anderen Zusätzen verpastbare Polyvinylchlorid-Typen werden bekanntlich Emulsions- oder Mikrosuspensionspolymerisate verwendet. Die Herstellung von Emulsions-Polyvinylchlorid ist in der Monographie von Kainer, Polyvinylchlorid und Vinylchlorid-Mischpolymerisate, Springer-Verlag Berlin/Heidelberg/New York (1965), Seite 34 ff, beschrieben.

Das Mikrosuspensions-Polyvinylchlorid wird hergestellt durch Verfahren, wonach das Vinylchlorid, gegebenenfalls zusammen mit anderen Monomeren, vor dem Erwärmen auf die Polymerisationstemperatur in Wasser, das ionogene und gegebenenfalls nichtionogene Emulgatoren enthält, zu einer stabilen Monomerdispersion homogenisiert und diese in an sich bekannter Weise mit Hilfe von monomerlöslichen Polymerisationskatalysatoren polymerisiert wird. Verfahren, denen diese Arbeitsweise zugrundeliegt, sind z. B. in den DE-PSP 962 834 und 10 69 387 sowie in der GB-PS 698 359 beschrieben. Die Herstellung der Polyvinylchlorid-Pasten ist wohlbekannt und in der Monographie von Kainer, Polyvinylchlorid und Vinylchlorid-Mischpolymerisate, Springer Verlag, Berlin/Heidelberg/New York (1965), Seiten 332 bis 343, beschrieben.

Zur weiteren Erläuterung der Erfindung dienen die folgenden Beispiele. Die angegebenen Teile sind Gewichtsteile.

## Beispiel 1

Ein mit Impeller-Rührer und Pfaudler-Stromstörer ausgerüsteter 40 l-Polymerisationsautoklav aus rostfreiem Stahl wurde mit folgenden Bestandteilen beschickt : 17 000 Teile Wasser, 10 Teile Natriumcarbonat, 100 Teile einer in 750 Teilen Wasser gelösten Methylcellulose mit einem Methoxyl-Substitutionsgrad von 28 % und einer Viskosität von 12 mPa.s, (gemessen in 2 gewichtsprozentiger wäßriger Lösung nach Brookfield bei 20 °C und 20 Upm), 10 Teile einer in 750 Teilen Wasser gelösten Methylcellulose mit einem Methoxyl-Substitutionsgrad von 28 % und einer Viskosität von 400 mPa.s, (gemessen an 2 gewichtsprozentiger Lösung nach Brookfield bei 20 °C und 20 Upm), 3,4 Teile Dicetylperoxydicarbonat, 6 Teile Dilauroylperoxid und 150 Teile eines Ethylen/Vinylacetat-Copolymeren mit einem Vinylacetatgehalt von 45 Gewichtsprozent und einer Viskositätszahl von 138 ml/g (gemessen in Toluol in einer Konzentration von 0,005 g/cm³ bei 25 °C). Der Kessel wurde geschlossen, mit Stickstoff gespült, evakuiert, anschließend mit 11 200 Teilen Vinylchlorid beschickt und zur Lösung des Ethylen/Vinylacetat-Copolymers zwei Stunden bei Raumtemperatur gerührt. Danach wurde bei einer Temperatur von 60 °C bis zu einem Druck von 5 bar polymerisiert. Das Produkt wurde nach Entgasung vom größten Teil des Suspensionswassers getrennt, mit Wasser gespült und bei 50 °C in einem Wirbelbetttrockner getrocknet. Wie aus Tabelle 1 zu entnehmen ist, resultiert ein extrem feines Produkt, das in Abmischung mit verpastbarem PVC eine deutliche Erniedrigung der Pastenviskosität bewirkt.

### Beispiel 2

Es wurde wie im Beispiel 1 verfahren, jedoch wurden 70 Teile Methylcellulose mit einem Methoxyl-Substitutionsgrad von 28 % und einer Viskosität von 12 mPa.s eingesetzt. Wie aus Tabelle 1 zu entnehmen ist, weist das so hergestellte Produkt ein sehr feines Korn und eine ausgeprägte viskositätserniedrigende Eigenschaft in Abmischung mit verpastbarem PVC aus.

### Beispiel 3

Es wurde wie im Beispiel 1 verfahren, jedoch wurden 60 Teile Methylcellulose mit einem Methoxyl-Substitutionsgrad von 28 % und einer Viskosität von 12 mPa.s eingesetzt. Wie aus Tabelle 1 zu entnehmen ist, weist das so hergestellte Produkt ein sehr feines Korn und eine ausgeprägte viskositätserniedrigende Eigenschaft in Abmischung mit verpastbarem PVC auf.

### Vergleichsbeispiel A (gemäß DE-PS 16 45 668)

Es wurde wie im Beispiel 1 verfahren, jedoch wurden anstelle der Methylcellulose 60 Teile einer in 1 500 Teilen Wasser gelösten Methylhydroxypropylcellulose mit einem Methoxyl-Substitutionsgrad von 22,1 Gewichtsprozent, einem Hydroxypropyl-Gehalt von 8,1 Gewichtsprozent und einer Viskosität von 100 mPa.s, (gemessen in einem Ubbelohde-Kapillarviskosimeter an 2 gewichtsprozentiger wäßriger Lösung bei 20 °C) und in Abwesenheit von Ethylen/Vinylacetat-Copolymer polymerisiert. Wie aus Tabelle 1 zu entnehmen ist, resultiert ein Produkt mit einem unerwünschten, hohen Grobanteil über 100 μm. Darüber hinaus bewirkt das so hergestellte Produkt eine unzureichende Pastenviskositätserniedrigung in Abmischung mit verpastbarem PVC.

### Beispiel 4

Es wurde im Beispiel 1 verfahren, jedoch wurden 90 Teile Methylcellulose mit einem Methoxyl-Substitutionsgrad von 28 % und einer Viskosität von 12 mPa.s und 200 Teile Ethylen/Vinylacetat-Copolymer eingesetzt. Wie aus Tabelle 1 zu entnehmen ist, resultiert ein sehr feines Produkt mit ausgeprägter viskositätserniedrigender Eigenschaft.

### Beispiel 5

Es wurde wie im Beispiel 4 verfahren, jedoch wurden 70 Teile Methylcellulose mit einem Methoxyl-Substitutionsgrad von 28 % und einer Viskosität von 12 mPa.s eingesetzt. Wie aus Tabelle 1 zu entnehmen ist, resultiert auch hier ein sehr feines Produkt mit ausgeprägter viskositätserniedrigender Eigenschaft.

### Beispiel 6

Es wurde wie im Beispiel 2 verfahren, jedoch wurden anstelle der 10 Teile Methylcellulose mit einer Viskosität von 400 mPa.s 5 Teile einer Methylhydroxypropylcellulose mit einem Methoxyl-Substitutionsgrad von 24 %, einem Hydroxy-Propoxyl-Substitutionsgrad von 5 % und einer Viskosität von 1 700 mPa.s, (gemessen in 2 gewichtsprozentiger wäßriger Lösung nach Brookfield bei 20 °C und 20 Upm), eingesetzt. Wie aus Tabelle 1 entnehmen ist, resultiert auch hier ein Produkt mit feinem Korn und ausgeprägter viskositätserniedrigender Eigenschaft.

### Beispiel 7

Es wurde wie im Beispiel 1 verfahren, jedoch wurden anstelle der Methylcellulosen 80 Teile einer Methylhydroxypropylcellulose mit einem Methoxyl-Substitutionsgrad von 28,5 %, einem Hydroxy-Propoxyl-Substitutionsgrad von 5 % und einer Viskosität von 50 mPa.s, (gemessen an 2 gewichtsprozentiger wäßriger Lösung bei 20 °C mit einem Ubbelohde-Kapillarviskosimeter), und 100 Teile Ethylen/Vinylacetat-Copolymer eingesetzt. Wie aus Tabelle 1 zu entnehmen ist, resultiert ein feines Produkt mit ausgeprägter viskositätserniedrigender Eigenschaft.

### Vergleichsbeispiel B (gemäß DE-PS 16 45 668)

Es wurde wie im Beispiel 7 verfahren, jedoch wurde in Abwesenheit des Ethylen/Vinylacetat-

Copolymeren polymerisiert. Wie aus Tabelle 1 zu entnehmen ist, resultiert ein feines Produkt mit jedoch deutlich mangelhaft viskositätserniedrigender Eigenschaft.

Beispiel 8

Ein mit Impeller-Rührer und Pfaudler-Stromstörer ausgerüsteter 40 1-Polymerisationsautoklav aus rostfreiem Stahl wurde mit folgenden Bestandteilen beschickt : 20 000 Teile Wasser, 1 800 Teile Vinylacetat, 13 Teile Lauroylperoxid, 80 Teile der in Beispiel 7 eingesetzten Methylhydroxypropylcellulose gelöst in 1 600 Teilen Wasser und 100 Teile des in Beispiel 1 eingesetzten Ethylen/Vinylacetat-Copolymeren. Der Kessel wurde geschlossen, mit Stickstoff gespült, evakuiert, anschließend mit 10 000 Teilen Vinylchlorid beschickt und zur Lösung des Ethylen/Vinylacetat-Copolymeren 2 Stunden bei Raumtemperatur gelöst. Danach wurde bei einer Temperatur von 60 °C bis zu einem Druck von 5 bar polymerisiert. Das Produkt wurde nach Entgasung vom größten Teil des Suspensionswassers getrennt, mit Wasser gespült und bei 50 °C in einem Wirbelbettrockner getrocknet. Wie aus Tabelle 1 zu entnehmen ist, resultiert ein feines Produkt, das in Abmischung mit verpastbarem PVC eine deutliche Erniedrigung der Pastenviskosität bewirkt.

Vergleichsbeispiel C

Es wurde wie im Beispiel 8 verfahren, jedoch wurde in Abwesenheit des Ethylen/Vinylacetat-Copolymeren polymerisiert. Wie aus Tabelle 1 zu entnehmen ist, weist das so hergestellte Produkt eine deutlich mangelhafte viskositätserniedrigende Eigenschaft auf.

(Siehe Tabelle 1 Seite 6 f.)

Tabelle 1

| | | Korngrößenverteilung Siebrückstand in Gew.-% bei folgender Maschenw. | | | | Schüttdichte [1) [g/l]$ | WW-Aufnahme [2)$ $\left[\frac{g\ DOP}{100\ g\ PVC}\right]$ | Pastenviskosität [3)$ in dPa s bei folgenden Schergeschwindigkeiten | | | | Reißkraft [4)$ $[N/mm^2]$ | Reißdehnung [4)$ $[\%]$ |
|---|---|---|---|---|---|---|---|---|---|---|---|---|---|
| | | 40 µm | 63 µm | 100 µm | 160 µm | | | $0,3\ s^{-1}$ | $1\ s^{-1}$ | $10\ s^{-1}$ | $100\ s^{-1}$ | | |
| (3092) | Beispiel 1 | 3,0 | 0,1 | | | 650 | 6,8 | .85 | 90 | 112 | 136 | 15,8 | 173 |
| (3108) | Beispiel 2 | 17 | 0,5 | | | 670 | 5,8 | - | 67 | 83 | 102 | 15,9 | 147 |
| (3109) | Beispiel 3 | 18 | 0,8 | | | 695 | 5,9 | - | 56 | 79 | 99 | 16,4 | 156 |
| | Vergleichsbeispiel A | 84 | 58 | 5,1 | 0,2 | 574 | 13,8 | 208 | 208 | 223 | - | 11,9 | 112 |
| (3113) | Beispiel 4 | 8,0 | 0,8 | | | 650 | 6,6 | 84 | 81 | 98 | 120 | 14,3 | 121 |
| (3126) | Beispiel 5 | 13,0 | 0,6 | | | 656 | 5,8 | 87 | 76 | 89 | 108 | 18,3 | 213 |
| (3127) | Beispiel 6 | 35 | 2,7 | 0,1 | | 669 | 5,7 | 82 | 80 | 94 | 110 | 16,6 | 177 |
| (3227) | Beispiel 7 | 29 | 2,0 | 0,1 | | 650 | 5,5 | 91 | 83 | 93 | 107 | 11,6 | 100 |
| (3312) | Vergleichsbeispiel B | 59 | 2,8 | 0,5 | | 565 | 9,4 | 406 | 433 | 534 | 529 | 16,8 | 185 |
| (3112) | Beispiel 8 | 16 | 1,5 | 0,1 | | 640 | 6,5 | 139 | 127 | 146 | 139 | 19,0 | 241 |
| (3111) | Vergleichsbeispiel C | 13 | 1,8 | 0,4 | | 560 | 8,7 | 480 | 404 | 446 | 465 | 18,3 | 238 |

[1) nach DIN 53 468

[2) nach DIN 53 417/1 (Zentrifugierverfahren)

[3) Pastenrezeptur : 50 Gewichtsteile Mikrosuspensions-Polyvinylchlorid
50 Gewichtsteile erfindungsgemäß hergestelltes Polyvinylchlorid
38 Gewichtsteile Di-2-Ethylenhexylphthalat
2 Gewichtsteile Ba/Cd/Zn-Stabilisator

Pastenviskosität wurde in einem Rheomat (Fa. Contraves) nach 24 Stunden Lagerzeit gemessen.

[4) Gelierfähigkeit der Paste (nach Entlüftung) wurde an 1 mm-Preßplatten (Gelierzeit von 1 Minute bei 170 °C) nach DIN 53 455 (Zugversuch) gemessen. Die Reißkraft-Werte und die Reißdehnungs-Werte sind Durchschnittswerte aus 7 Meßwerten.

0 080 580

**0 080 580**

**Patentansprüche**

1. Verfahren zur Herstellung von Polymeren und Copolymeren des Vinylchlorids durch Suspensionspolymerisation in Gegenwart von monomerlöslichen Katalysatoren und von einem oder mehreren Suspensionsstabilisatoren und gegebenenfalls von pH-Puffersystemen, dadurch gekennzeichnet, daß als Suspensionsstabilisator entweder

(A) eine Methylhydroxypropylcellulose mit einem Methoxyl-Substitutionsgrad von 20 bis 32 %, einem Hydroxy-Propoxyl-Substitutionsgrad von 2 bis 10 % und einer Viskosität von 30 bis 70 mPa.s, (gemessen in 2 gewichtsprozentiger wäßriger Lösung bei 20 °C, Ubbelohde-Kapillarviskosimeter) und/oder

(B) eine Suspensionsmittelkombination, bestehend aus :

a) Methylcellulose mit einem Methoxyl-Substitutionsgrad von 22 bis 34 % und einer Viskosität von 7 bis 20 mPa.s, (gemessen in 2 gewichtsprozentiger wäßriger Lösung nach Brookfield bei 20 °C und 20 Upm) und

b) Methylcellulose mit einem Methoxyl-Substitutionsgrad von 22 bis 34 % und einer Viskosität von 50 mPa.s bis 4 000 mPa.s, (gemessen in 2 gewichtsprozentiger wäßriger Lösung nach Brookfield bei 20 °C und 20 Upm) und/oder Methylhydroxypropylcellulose mit einem Methoxyl-Substitutionsgrad von 20 bis 32 %, einem Hydroxy-Propoxyl-Substitutionsgrad von 2 bis 10 % und einer Viskosität von 100 bis 3 000 mPa.s, (gemessen in 2 gewichtsprozentiger wäßriger Lösung nach Brookfield bei 20 °C und 20 Upm) eingesetzt werden, und in Gegenwart von 0,4 bis 8 Gewichtsprozent, bezogen auf das Monomere, von Ethylen/Vinylacetat-Copolymeren mit einem Vinylacetat-Gehalt von 38 bis 55 Gewichtsprozent und mit einer Viskositätszahl von 95 bis 210 ml/g, (gemessen in Toluol in einer Konzentration von 0,005 g/cm³ bei 25 °C), polymerisiert wird.

2. Verfahren nach Anspruch 1, dadurch gekennzeichnet, daß als Suspensionstabilisator 0,15 bis 1,5 Gewichtsprozent, bezogen auf das Monomere, einer Methylhydroxypropylcellulose mit einem Methoxyl-Substitutionsgrad von 20 bis 32 % und einem Hydroxy-Propoxyl-Substitutionsgrad von 2 bis 10 % und einer Viskosität von 30 bis 70 mPa.s, (gemessen in einer 2 gewichtsprozentigen wäßrigen Lösung mit einem Ubbelohde-Kapillarviskosimeter), eingesetzt werden.

3. Verfahren nach Anspruch 1, dadurch gekennzeichnet, daß als Suspensionsstabilisator eine Kombination bestehend aus :

a) 0,3 bis 1,5 Gewichtsprozent, bezogen auf Monomere, einer Methylcellulose mit einem Methoxyl-Substitutionsgrad von 22 bis 34 % und einer Viskosität von 7 bis 20 mPa.s, (gemessen in 2 gewichtsprozentiger wäßriger Lösung nach Brookfield bei 20 °C und 20 Upm) und

b) 0,01 bis 0,2 Gewichtsprozent, bezogen auf Monomere, einer Methylcellulose mit einem Methoxyl-Substitutionsgrad von 22 bis 34 % und einer Viskosität von 50 bis 4 000 mPa.s, (gemessen in 2 gewichtsprozentiger wäßriger Lösung nach Brookfield bei 20 °C und 20 Upm) und/oder 0,01 bis 0,2 Gewichtsprozent, bezogen auf Monomere, einer Methylhydroxypropylcellulose mit einem Methoxyl-Substitutionsgrad von 20 bis 32 % einem Hydroxy-Propoxyl-Substitutionsgrad von 2 bis 10 % und einer Viskosität von 100 bis 3 000 mPa.s, (gemessen in 2 gewichtsprozentiger wäßriger Lösung nach Brookfield bei 20 °C und 20 Upm), eingesetzt wird.

4. Verfahren nach Anspruch 1, dadurch gekennzeichnet, daß in Gegenwart von Ethylen/Vinylacetat-Copolymerisaten mit einem Vinylacetat-Gehalt von 42 bis 48 Gewichtsprozent polymerisiert wird.

5. Verfahren nach den Ansprüchen 1 und 4, dadurch gekennzeichnet, daß in Gegenwart von Ethylen/Vinylacetat-Copolymerisaten mit einer Viskositätszahl von 110 ml/g bis 160 ml/g, (gemessen in Toluol in einer Konzentration von 0,005 g/cm³ bei 25 °C), polymerisiert wird.

6. Verfahren nach den Ansprüchen 1 bis 5, dadurch gekennzeichnet, daß in Gegenwart von 0,6 bis 3 Gewichtsprozent Ethylen/Vinylacetat-Copolymeren, bezogen auf das Monomere oder Monomergemisch, polymerisiert wird.

7. Verwendung der nach den Ansprüchen 1 bis 6 hergestellten Vinylchlorid-Polymerisate und Copolymerisate zur Erniedrigung der Viskosität von Dispersionen aus pastenfähigen Vinylchlorid-Polymerisaten und Copolymerisaten, Weichmachern und gegebenenfalls weiteren Zusatzstoffen.

**Claims**

1. A process for the production of a vinyl chloride homopolymer or copolymer by suspension polymerisation in the presence of a catalyst soluble in the monomer(s) and of one or more suspension stabilisers and optionally of a pH buffer system, characterised in that there is employed as suspension stabiliser either

(A) a methylhydroxypropylcellulose with a degree of methoxy substitution of 20 to 32 %, a degree of hydroxypropoxy substitution of 2 to 10 % and a viscosity of 30 to 70 mPa.s (measured in a 2 wt.% aqueous solution at 20 °C by means of a Ubbelohde capillary viscometer), and/or

(B) a suspending agent composition comprising

a) methylcellulose with a degree of methoxy substitution of 22 to 34 % and a viscosity of 7 to 20 mPa.s (measured in a 2 wt.% aqueous solution at 20 °C and 20 Upm according to Brookfield) and

7

b) methylcellulose with a degree of methoxy substitution of 22 to 34 % and a viscosity of 50 to 4 000 mPa.s (measured in a 2 wt.% aqueous solution at 20 °C and 20 Upm according to Brookfield) and/or methylhydroxypropylcellulose with a degree of methoxy substitution of 20 to 32 %, a degree of hydroxypropoxy substitution of 2 to 10 % and a viscosity of 100 to 3 000 mPa.s (measured in a 2 wt.% aqueous solution at 20 °C and 20 Upm according to Brookfield),
and the polymerisation is carried out in the presence of 0.4 to 8 wt.%, based on the monomer(s), of an ethylene/vinyl acetate copolymer having a vinyl acetate content of 38 to 55 wt.% and a viscosity number of 95 to 210 ml/g (measured in toluene at a 25 °C at concentration of 0.005 g/cm$^3$).

2. A process according to claim 1, characterised in that there is employed as suspension stabiliser 0.15 to 1.5 wt.%, based on the monomer(s), of a methylhydroxypropylcellulose with a degree of methoxy substitution of 20 to 32 % and a degree of hydroxypropoxy substitution of 2 to 10 % and a viscosity of 30 to 70 mPa.s (measured in a 2 wt.% aqueous solution with an Ubbelohde capillary viscometer).

3. A process according to claim 1, characterised in that there is employed as suspension stabiliser a composition comprising
a) 0.3 to 1.5 wt.%, based on the monomer(s), of a methylcellulose with a degree of methoxy substitution of 22 to 34 % and a viscosity of 7 to 20 mPa.s (measured in a 2 wt.% aqueous solution at 20 °C and 20 Upm according to Brookfield), and
b) 0.01 to 0.2 wt.%, based on the monomer(s) of a methylcellulose with a degree of methoxy substitution of 22 to 34 % and a viscosity of 50 to 4 000 mPa.s (measured in a 2 wt.% aqueous solution at 20 °C and 20 Upm according to Brookfield) and/or 0.01 to 0.2 wt.%, based on the monomer(s), of a methylhydroxypropylcellulose with a degree of methoxy substitution of 20 to 32 %, a degree of hydroxypropoxy substitution of 2 to 10 % and a viscosity of 100 to 3 000 mPa.s (measured in a 2 wt.% aqueous solution at 20 °C and 20 Upm according to Brookfield).

4. A process according to claim 1, characterised in that the polymerisation is carried out in the presence of an ethylene/vinyl acetate copolymer having a vinyl acetate content of 42 to 48 wt.%.

5. A process according to claim 1 or 4, characterised in that the polymerisation is carried out in the presence of an ethylene/vinyl acetate copolymer having a viscosity number of 110 to 160 ml/g (measured in toluene at 25 °C at a concentration of 0.005 g/cm$^3$).

6. A process according to any of claims 1 to 5, characterised in that the polymerisation is carried out in the presence of 0.6 to 3 wt.% of an ethylene/vinyl acetate copolymer, based on the monomer or monomer mixture.

7. The use of a vinyl chloride homopolymer or copolymer produced according to any of claims 1 to 6 for lowering the viscosity of a dispersion of a pasty vinyl chloride homopolymer or copolymer, a plasticiser and optionally further additive(s).

**Revendications**

1. Procédé pour la préparation de polymères et de copolymères du chlorure de vinyle par polymérisation en suspension en présence de catalyseurs solubles dans le monomère et d'un ou plusieurs stabilisateurs de suspension et éventuellement de systèmes de tamponnage de pH, caractérisé par le fait que, comme stabilisateur de suspension, on utilise ou bien
(A) une méthyl-hydroxy-propyl-cellulose ayant un degré de substitution méthoxyle de 20 à 32 %, un degré de substitution hydroxy-propoxyle de 2 à 10 % et une viscosité de 30 à 70 mPa.s (mesurée en solution aqueuse à 2 % en poids à 20 °C, viscosimètre capillaire Ubbelohde) et/ou
(B) une association d'agents de suspension formée :
a) de méthyle-cellulose ayant un degré de substitution méthoxyle de 22 à 34 % et une viscosité de 7 à 20 mPa.s (mesurée en solution aqueuse à 2 % en poids selon Brookfield à 20 °C et 20 tours par minute) et
b) de méthyl-cellulose ayant un degré de substitution méthoxyle de 22 à 34 % et une viscosité de 50 à 4 000 mPa.s (mesurée en solution aqueuse à 2 % en poids selon Brookfield à 20 °C et 20 tours par minute) et/ou de méthyl-hydroxy-propyl-cellulose ayant un degré de substitution méthoxyle de 20 à 32 %, un degré de substitution hydroxy-propoxyle de 2 à 10 % et une viscosité de 100 à 3 000 mPa.s (mesurée en solution aqueuse à 2 % en poids selon Brookfield à 20 °C et 20 tours par minute)
et que l'on polymérise en présence de 0,4 à 8 % en poids, relativement au monomère, de copolymères d'éthylène et d'acétate de vinyle ayant une teneur en acétate de vinyle de 38 à 55 % en poids et un indice de viscosité de 95 à 210 ml/g (mesuré dans le toluène à une concentration de 0,005 g/cm$^3$ à 25 °C).

2. Procédé selon la revendication 1, caractérisé par le fait que l'on utilise, comme stabilisateur de suspension, de 0,15 à 1,5 % en poids, relativement au monomère, d'une méthyl-hydroxy-propyl-cellulose ayant un degré de substitution méthoxyle de 20 à 32 % et un degré de substitution hydroxy-propoxyle de 2 à 10 % et une viscosité de 30 à 70 mPa.s (mesurée dans une solution aqueuse à 2 % en poids avec un viscosimètre capillaire Ubbelohde).

3. Procédé selon la revendication 1, caractérisé par le fait que l'on utilise comme stabilisateur de suspension une association formée :
a) de 0,3 à 1,5 % en poids, relativement au monomère, d'une méthyl-cellulose ayant un degré de substitution méthoxyle de 22 à 34 % et une viscosité de 7 à 20 mPa.s (mesurée en solution aqueuse à 2 % en poids selon Brookfield à 20 °C et 20 tours par minute) et

b) de 0,01 à 0,2 % en poids, relativement au monomère, d'une méthyl-cellulose ayant un degré de substitution méthoxyle de 22 à 34 % et une viscosité de 50 à 4 000 mPa.s (mesurée en solution aqueuse à 2 % en poids selon Brookfield à 20 °C et 20 tours par minute) et/ou de 0,01 à 0,2 % en poids, relativement au monomère, d'une méthyl-hydroxy-propyl-cellulose ayant un degré de substitution méthoxyle de 20 à 32 %, un degré de substitution hydroxy-propoxyle de 2 à 10 % et une viscosité de 100 à 3 000 mPa.s (mesurée en solution aqueuse à 2 % en poids selon Brookfield à 20 °C et 20 tours par minute).

4. Procédé selon la revendication 1, caractérisé par le fait que l'on polymérise en présence de produits de copolymérisation d'éthylène et d'acétate de vinyle ayant une teneur en acétate de vinyle de 42 à 48 % en poids.

5. Procédé selon les revendications 1 et 4, caractérisé par le fait que l'on polymérise en présence de produits de copolymérisation d'éthylène et d'acétate de vinyle ayant un indice de viscosité de 110 ml/g à 160 ml par gramme (mesuré dans le toluène à une concentration de 0,005 g/cm$^3$ à 25 °C).

6. Procédé selon les revendications 1 à 5, caractérisé par le fait que l'on polymérise en présence de 0,6 à 3 % en poids de copolymères d'éthylène et d'acétate de vinyle relativement au monomère ou au mélange de monomères.

7. Utilisation des produits de polymérisation et de copolymérisation de chlorure de vinyle préparés selon les revendications 1 à 6 pour abaisser la viscosité de dispersions de produits de polymérisation et de copolymérisation de chlorure de vinyle pouvant former une pâte, de plastifiants et éventuellement d'autres additifs.